# FASCICULE DE BREVET EUROPEEN

(11) **EP 3 620 644 B1**
(45) Date de publication et mention de la délivrance du brevet: **26.05.2021**
(21) Numéro de dépôt: 19184613.8
(22) Date de dépôt: 05.07.2019
(51) Int. Cl.: F02K 1/72

(54) **TURBORÉACTEUR COMPORTANT UNE NACELLE EQUIPÉE D'UN SYSTÈME INVERSEUR COMPORTANT DES PORTES INTÉRIEURES ET DES VOLETS EXTÉRIEURS**
TURBOSTRAHLTRIEBWERK, DAS EINE MIT EINEM UMKEHRSYSTEM AUSGESTATTETE GONDEL MIT INNENTÜREN UND AUSSENKLAPPEN UMFASST
TURBOJET ENGINE COMPRISING A NACELLE PROVIDED WITH A REVERSER SYSTEM COMPRISING INNER DOORS AND OUTER FLAPS

(30) Priorité: 06.09.2018 FR 1858011
(43) Date de publication de la demande: 11.03.2020
(73) Titulaire: AIRBUS OPERATIONS (S.A.S.), 31060 Toulouse (FR)
(72) Inventeur: CZAPLA, Lionel, 31060 TOULOUSE Cedex 9 (FR); GACHES, Thierry, 31060 TOULOUSE Cedex 9 (FR); SABATHIER, Bastian, 31060 TOULOUSE Cedex 9 (FR); PIARD, Frédéric, 31060 TOULOUSE Cedex 9 (FR); GARDES, Pascal, 31060 TOULOUSE Cedex 9 (FR); RIDRAY, Frédéric, 31060 TOULOUSE Cedex 9 (FR); GONCALVES, José, 31060 TOULOUSE Cedex 9 (FR); SILLIERES, Lionel, 31060 TOULOUSE Cedex 9 (FR); PRESSEQ, Laurent, 31060 TOULOUSE Cedex 9 (FR); CAZALIS, Julie, 31060 TOULOUSE Cedex 9 (FR)
(74) Mandataire: Gicquel, Olivier Yves Gérard

(56) Documents cités:
- EP-A1- 3 029 306
- EP-A2- 3 103 995
- FR-A1- 2 887 225

## Description

La présente invention concerne un turboréacteur double flux qui comporte une nacelle équipée d'un système inverseur comportant des portes intérieures et des volets extérieurs, ainsi qu'un aéronef comportant au moins un tel turboréacteur double flux.

Un aéronef comporte un fuselage de chaque côté duquel est fixée une aile. Sous chaque aile est suspendu au moins un turboréacteur double flux qui se décompose de l'avant vers l'arrière, en une entrée d'air, une soufflante, un noyau moteur et une tuyère d'éjection. L'air aspiré par la soufflante, pénètre par l'entrée d'air et se sépare en un flux primaire qui traverse le noyau moteur et un flux secondaire qui s'écoule autour du noyau moteur dans une veine secondaire prévue à cet effet. Les deux flux se rejoignent pour être expulsés à travers la tuyère d'éjection.

Chaque turboréacteur double flux est fixé sous l'aile par l'intermédiaire d'un mât qui est fixé entre la structure de l'aile et la structure du turboréacteur double flux.

Le turboréacteur double flux comporte le noyau moteur et une nacelle qui est fixée autour du moteur pour délimiter entre eux la veine secondaire et former le capot de soufflante.

La nacelle comporte un ensemble fixe disposé à l'avant et qui inclut en particulier le capot de soufflante et un ensemble mobile qui est disposé à l'arrière de l'ensemble fixe et qui est mobile en translation d'une position avancée dans laquelle l'ensemble mobile est accolé à l'ensemble fixe et une position reculée dans laquelle l'ensemble mobile est reculé par rapport à l'ensemble fixe de manière à ouvrir une fenêtre entre eux, où cette fenêtre est ouverte entre la veine secondaire et l'extérieur de la nacelle.

La nacelle comporte un système inverseur qui comprend une pluralité de portes intérieures fixées à l'avant de l'ensemble mobile, où chacune est mobile entre une position stockée dans laquelle elle n'est pas en travers de la veine secondaire et une position déployée dans laquelle elle est positionnée en travers de la veine secondaire pour diriger le flux secondaire vers la fenêtre dégagée par le recul de l'ensemble mobile.

Du fait de l'accroissement des dimensions intérieures du turboréacteur, le volume nécessaire au déplacement de l'ensemble mobile se réduit, ce qui peut réduire la distance de recul de l'ensemble mobile et par voie de conséquence, les dimensions de la fenêtre. Il est donc intéressant de trouver un turboréacteur dont la nacelle est agencée de manière à permettre un meilleur recul de l'ensemble mobile.

Le document EP3029306 divulgue le préambule de la revendication 1.

Un objet de la présente invention est de proposer un turboréacteur double flux qui comporte une nacelle équipée d'un système inverseur avec une pluralité de portes intérieures et de volets extérieurs et qui autorise une distance de recul plus importante de l'ensemble mobile. A cet effet, est proposé un turboréacteur double flux tel que revendiqué dans la revendication 1.

Un tel turboréacteur permet d'augmenter la distance de recul en dégageant une partie du capot de soufflante et d'améliorer l'orientation du flux d'air passant par la fenêtre en orientant les volets extérieurs.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de côté d'un aéronef comportant un turboréacteur double flux selon l'invention,
la Fig. 2 est une vue en perspective et de l'intérieur d'une partie d'une nacelle du turboréacteur double flux selon l'invention,
la Fig. 3 est une représentation schématique et en coupe d'un turboréacteur selon l'invention en position avancée et stockée,
la Fig. 4 est une représentation similaire à celle de la Fig. 3 pour une position intermédiaire correspondant à une position reculée et stockée, et
la Fig. 5 est une représentation similaire à celle de la Fig. 3 pour une position reculée et déployée.

Dans la description qui suit, les termes relatifs à une position sont pris en référence au sens d'avancement de l'aéronef.

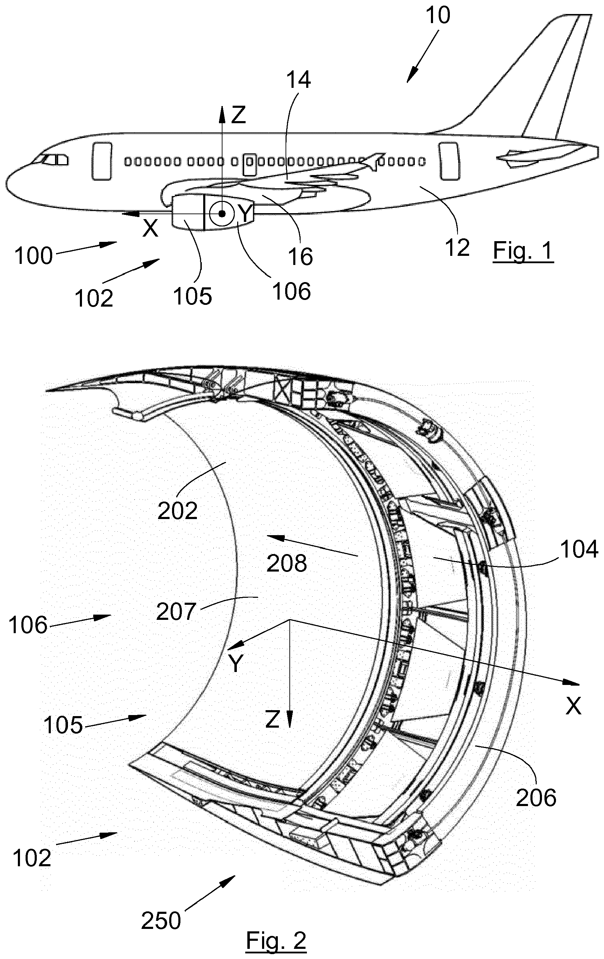

La Fig. 1 montre un aéronef 10 qui comporte un fuselage 12 de chaque côté duquel est fixée une aile 14 qui porte au moins un turboréacteur double flux 100 selon l'invention. La fixation du turboréacteur double flux 100 sous l'aile 14 s'effectue par l'intermédiaire d'un mât 16.

Le turboréacteur double flux 100 présente une nacelle 102 et un moteur qui est logé à l'intérieur de la nacelle 102 sous forme d'un noyau moteur et où une veine secondaire est délimitée entre le noyau moteur et la nacelle 102.

La nacelle 102 comporte un ensemble fixe 105 disposé à l'avant et qui inclut en particulier une partie avant du capot de soufflante et un ensemble mobile 106 qui est disposé à l'arrière de l'ensemble fixe 105 et qui est mobile en translation d'une position avancée dans laquelle l'ensemble mobile 106 est accolé à l'ensemble fixe 105 et une position reculée dans laquelle l'ensemble mobile 106 est reculé par rapport à l'ensemble fixe 105 de manière à ouvrir une fenêtre entre eux, et où cette fenêtre est ouverte entre la veine secondaire et l'extérieur de la nacelle 102.

Dans la description qui suit, et par convention, on appelle X l'axe longitudinal du turboréacteur double flux 100 qui est parallèle à l'axe longitudinal de l'aéronef 10 orienté positivement vers l'avant de l'aéronef 10, on appelle Y l'axe transversal qui est horizontal lorsque l'aéronef est au sol, et Z l'axe vertical, ces trois directions X, Y et Z étant orthogonales entre elles.

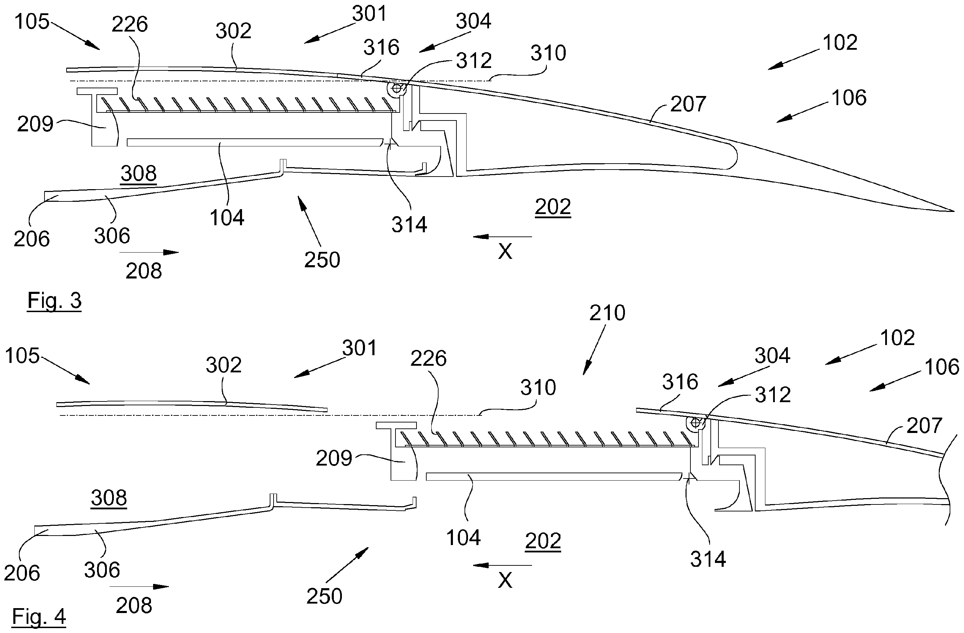

La Fig. 2 montre une partie de la nacelle 102 et les Figs. 3 à 5 montrent différentes positions d'un système inverseur 250 de la nacelle 102.

Le turboréacteur double flux 100 présente entre la nacelle 102 et le moteur, la veine secondaire 202 dans laquelle circule le flux secondaire 208 provenant de l'entrée d'air à travers la soufflante et qui s'écoule donc selon le sens d'écoulement qui va de l'avant vers l'arrière de la nacelle 102.

L'ensemble fixe 105 présente une structure fixe 206 qui est montée fixe sur la partie avant 302 d'un carter de soufflante 301.

L'ensemble mobile 106 comprend un capot mobile 207 formant les parois extérieures de la tuyère et un cadre 209 autour du moteur. Le cadre 209 prend ici la forme d'un cylindre à zones ajourées. Le capot mobile 207 est fixé au et à l'arrière du cadre 209.

L'ensemble mobile 106 comprend une partie arrière 304 du carter de soufflante 301 qui forme une jupe et prolonge la partie avant 302 du carter de soufflante 301. La partie arrière 304 est montée à l'avant du capot mobile 207. La surface extérieure du carter de soufflante 301 se resserre en progressant de l'avant vers l'arrière pour s'aligner avec le capot mobile 207.

L'ensemble mobile 106, par l'intermédiaire du cadre 209, est monté mobile en translation selon une direction de translation globalement parallèle à l'axe longitudinal X sur la structure fixe 206 de la nacelle 102.

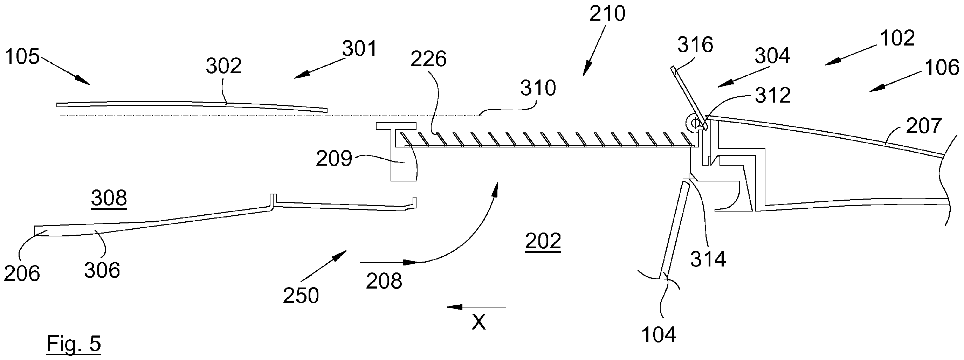

L'ensemble mobile 106, et donc le cadre 209, est mobile entre une position avancée (Fig. 3) et une position reculée (Figs. 4 et 5) et inversement. En position avancée, l'ensemble mobile 106, et donc le cadre 209, est positionné le plus en avant possible par rapport à l'axe longitudinal X de manière à ce que la partie arrière 304 du carter de soufflante 301 soit rapprochée et prolonge la partie avant 302 du carter de soufflante 301. Ainsi, de l'avant vers l'arrière, la partie avant 302, la partie arrière 304 et le capot mobile 207 se prolongent de manière à définir une surface extérieure aérodynamique. En position reculée, l'ensemble mobile 106, et donc le cadre 209, est positionné le plus en arrière possible par rapport à l'axe longitudinal X de manière à ce que la partie arrière 304 du carter de soufflante 301 soit éloignée vers l'arrière de la partie avant 302 du carter de soufflante 301.

En position reculée, la partie arrière 304 du carter de soufflante 301 et la partie avant 302 du carter de soufflante 301 sont à distance et définissent entre elles la fenêtre 210 ouverte entre la veine secondaire 202 et l'extérieur de la nacelle 102. C'est-à-dire que l'air provenant du flux secondaire 208 traverse la fenêtre 210 pour rejoindre l'extérieur du turboréacteur double flux 100.

La fenêtre 210 est formée par les zones ajourées prévues dans le cadre 209.

La partie avant 302 délimite la fenêtre 210 en avant par rapport à l'axe longitudinal X et la partie arrière 304 délimite la fenêtre 210 en arrière par rapport à l'axe longitudinal X.

La translation du cadre 209, et donc de l'ensemble mobile 106, est réalisée par tous systèmes de glissières appropriés comme par exemple des glissières entre la structure fixe 206 et le cadre 209. Le déplacement de l'ensemble mobile 106 est assuré par tous types d'actionneurs appropriés et commandés par une unité de contrôle, par exemple du type processeur, qui commande les déplacements dans un sens ou dans l'autre selon les besoins de l'aéronef 10. Chaque actionneur peut prendre par exemple la forme d'un vérin électrique à billes ou tout autre type de vérins appropriés.

L'ensemble mobile 106 comporte une pluralité de portes intérieures 104 réparties à l'intérieur de la nacelle 102 autour du moteur et sur la périphérie en fonction de l'ouverture angulaire de la fenêtre 210 autour de l'axe longitudinal X.

Chaque porte intérieure 104 est montée articulée sur le cadre 209 entre une position stockée (Figs. 3 et 4) et une position déployée (Fig. 5) et inversement. Le passage de la position stockée à la position déployée s'effectue par une rotation de la porte intérieure 104 vers l'intérieur du turboréacteur 100. L'articulation s'effectue le long d'un bord arrière de la porte intérieure 104 tandis que le bord avant de la porte intérieure 104 se déplace.

La position stockée des portes intérieures 104 peut être adoptée lorsque le cadre 209 est en position avancée ou en position reculée. La position déployée des portes intérieures 104 ne peut être adoptée que lorsque le cadre 209 est en position reculée.

En position stockée, chaque porte intérieure 104 obture une zone ajourée du cadre 209 lorsque ce dernier est en position avancée et en position reculée. En position déployée, la porte intérieure 104 s'étend vers le moteur, c'est-à-dire en travers de la veine secondaire 202 et n'obture pas ladite zone ajourée du cadre 209 libérant la fenêtre 210 et permettant le passage du flux secondaire 208. En position déployée, la porte intérieure 104 permet d'orienter le flux secondaire 208 de manière à créer une contre-poussée.

Dans le mode de réalisation de l'invention présenté sur les Figs. 3 à 5, pour contrôler encore mieux le flux secondaire 208 sortant de la fenêtre 210, la nacelle 102 comporte au moins un déflecteur 226 (s'il y en a plusieurs c'est alors une grille de type cascade) qui est fixé au cadre 209 et disposé en travers de la zone ajourée du cadre 209.

La structure fixe 206 comprend une paroi intérieure 306 qui forme la paroi extérieure de la veine secondaire 202 et s'étend donc à l'intérieur de la partie avant 302.

La partie avant 302 et la paroi intérieure 306 définissent entre elles un compartiment 308 dans lequel sont logés le cadre 209 et les portes intérieures 104 lorsque l'ensemble mobile 106 est en position avancée. En position reculée, le cadre 209 et les portes intérieures 104 sortent du compartiment 308.

Du fait de l'encombrement réduit à l'intérieur du compartiment 308 et le fait que le carter de soufflante 301 se resserre vers l'arrière pourraient entraver le déplacement du cadre 209. La ligne 310 matérialise la limite d'encombrement du cadre 209.

Pour éviter une interaction entre le carter de soufflante 301 et le cadre 209 lors du déplacement de ce dernier, l'extrémité avant de la partie arrière 304 est au-delà vers l'extérieur du cadre 209, c'est-à-dire à l'extérieur par rapport à la ligne d'encombrement 310. Ainsi, au cours de son déplacement, le cadre 209 n'est pas gêné par le carter de soufflante 301 et il peut reculer sur une plus grande distance.

La partie arrière 304 est divisée en plusieurs volets extérieurs 316 où chacun est monté articulé par son bord arrière au cadre 209 et est mobile entre une position abaissée (Figs. 3 et 4) et une position relevée (Fig. 5). En position abaissée, chaque volet extérieur 316 est aligné avec le capot mobile 207 et la partie avant 302 afin de réaliser une surface aérodynamique et chaque volet extérieur 316 s'étend en regard de la partie arrière de la zone ajourée du cadre 209 et donc de la fenêtre 210 et à l'extérieur par rapport à celles-ci. En position relevée, chaque volet extérieur 316 est basculé de manière à projeter son bord avant vers l'extérieur et ainsi libérer la partie arrière de la zone ajourée du cadre 209. Le bord avant de chaque volet extérieur 316 se positionne vers l'avant en position abaissée et vers l'extérieur en position relevée.

La position abaissée des volets extérieurs 316 peut être adoptée lorsque le cadre 209 est en position avancée ou en position reculée et la position relevée ne peut être adoptée que lorsque le cadre 209 est en position reculée.

En outre, les volets extérieurs 316 permettent d'améliorer l'orientation vers l'avant du flux secondaire 208 en sortie de la fenêtre 210 puisque lorsque les portes intérieures 104 et les volets extérieurs 316 sont déployés, ils forment globalement une continuité.

Chaque volet extérieur 316 est déplacé entre sa position abaissée et sa position relevée et inversement par un moteur électrique 312 commandé par l'unité de contrôle en fonction des besoins.

Chaque porte intérieure 104 est articulée par son bord arrière au cadre 209 sur des charnières 314 tandis que le bord avant opposé est libre et se positionne vers l'avant en position stockée et vers le moteur en position déployée.

Le déplacement de chaque porte intérieure 104 de la position stockée à la position déployée et inversement est réalisé par tous types d'actionneurs appropriés comme par exemple des vérins ou des moteurs et commandés par l'unité de contrôle.

Selon un autre mode de réalisation, le moteur électrique 312 est absent, et le déplacement du volet extérieur 316 de la position abaissée à la position relevée est combiné mécaniquement au déplacement de la porte intérieure 104.

## Revendications

1. Turboréacteur double flux (100) comportant un moteur et une nacelle (102) entourant le moteur et où une veine secondaire (202) d'un flux secondaire (208) est délimitée entre la nacelle (102) et le moteur, ladite nacelle (102) comportant :
- un carter de soufflante (301) comportant une partie avant (302) et une partie arrière (304),
- un ensemble fixe (105) disposé à l'avant et comportant une structure fixe (206) et la partie avant (302),
- un ensemble mobile (106) disposé à l'arrière de l'ensemble fixe (105) et comportant un cadre (209) à zones ajourées, un capot mobile (207) fixé au cadre (209) et la partie arrière (304) montée à l'avant du capot mobile (207), l'ensemble mobile (106) étant mobile en translation sur la structure fixe (206) selon une direction de translation entre une position avancée dans laquelle l'ensemble mobile (106) est positionné de manière à ce que la partie arrière (304) soit rapprochée et prolonge la partie avant (302), et une position reculée dans laquelle l'ensemble mobile (106) est positionné de manière à ce que la partie arrière (304) soit éloignée vers l'arrière de la partie avant (302) pour définir entre elles une fenêtre (210) ouverte entre la veine secondaire (202) et l'extérieur de la nacelle (102),
- une pluralité de portes intérieures (104) montées articulées le long d'un bord arrière sur le cadre (209) entre une position stockée et une position déployée, où en position stockée, chaque porte intérieure (104) obture une zone ajourée du cadre (209) et où en position déployée, chaque porte intérieure (104) s'étend en travers de la veine secondaire (202),
- un premier actionneur prévu pour assurer le déplacement en translation du cadre (209) de la position avancée à la position reculée et inversement, et
- un deuxième actionneur prévu pour assurer le déplacement de chaque porte intérieure (104) de la position stockée à la position déployée et inversement,
**caractérisé en ce que** la partie arrière (304) est divisée en plusieurs volets extérieurs (316) où chacun est monté articulé par son bord arrière au cadre (209) et est mobile entre une position abaissée dans laquelle chaque volet extérieur (316) est aligné avec le capot mobile (207) et s'étend en regard d'une partie arrière de la zone ajourée du cadre (209) et une position relevée dans laquelle chaque volet extérieur (316) est basculé de manière à projeter son bord avant vers l'extérieur et à libérer la partie arrière de la zone ajourée du cadre (209), et
**en ce que** ladite nacelle (102) comporte en outre, pour chaque volet extérieur (316), un moteur électrique (312) prévu pour déplacer ledit volet extérieur (316) de la position abaissée à la position relevée et inversement.

2. Turboréacteur double flux (100) selon la revendication 1, **caractérisé en ce qu'**il comporte au moins déflecteur (226) fixé au cadre (209) et disposé en travers de la zone ajourée du cadre (209).

3. Aéronef (10) comportant au moins un turboréacteur double flux (100) selon l'une des revendications précédentes.

## Patentansprüche

1. Zweistrom-Turbinenstrahltriebwerk (100), umfassend einen Antrieb und eine den Antrieb umgebende Gondel (102), wobei ein Sekundärstromkanal (202) eines Sekundärstroms (208) zwischen der Gondel (102) und dem Antrieb begrenzt ist, wobei die Gondel (102) Folgendes umfasst:
- ein Gebläsegehäuse (301), das einen vorderen Teil (302) und einen hinteren Teil (304) umfasst,
- eine feste Anordnung (105), die vorn angeordnet ist und eine feste Struktur (206) und den vorderen Teil (302) umfasst,
- eine bewegliche Anordnung (106), die hinter der festen Anordnung (105) angeordnet ist und einen Rahmen (209) mit durchbrochenen Zonen, eine am Rahmen (209) befestigte bewegliche Abdeckung (207) und den vor der beweglichen Abdeckung (207) montierten hinteren Teil (304) umfasst, wobei die bewegliche Anordnung (106) auf der festen Struktur (206) in einer Translationsrichtung zwischen einer vorgeschobenen Position, in der die bewegliche Anordnung (106) so positioniert ist, dass der hintere Teil (304) dem vorderen Teil (302) angenähert ist und diesen verlängert, und einer zurückgezogenen Position, in der die bewegliche Anordnung (106) so positioniert ist, dass der hintere Teil (304) vom vorderen Teil (302) nach hinten entfernt ist, um dazwischen ein offenes Fenster (210) zwischen dem Sekundärstromkanal (202) und dem Äußeren der Gondel (102) zu definieren, translatorisch bewegbar ist,
- mehrere Innentüren (104), die entlang einer hinteren Kante am Rahmen (209) zwischen einer eingefahrenen Position und einer ausgefahrenen Position angelenkt sind, wobei in der eingefahrenen Position jede Innentür (104) einen durchbrochenen Bereich des Rahmens (209) verschließt und wobei sich in der ausgefahrenen Position jede Innentür (104) quer zum Sekundärstromkanal (202) erstreckt,
- einen ersten Aktor, der dazu vorgesehen ist, die translatorische Verschiebung des Rahmens (209) von der vorgeschobenen Position in die zurückgezogene Position und umgekehrt zu gewährleisten, und
- einen zweiten Aktor, der dazu vorgesehen ist, die Bewegung jeder Innentür (104) von der eingefahrenen Position in die ausgefahrene Position und umgekehrt zu gewährleisten,
**dadurch gekennzeichnet, dass** der hintere Teil (304) in mehrere äußere Klappen (316) unterteilt ist, von denen jede an ihrer hinteren Kante am Rahmen (209) angelenkt und zwischen einer abgesenkten Position, in der jede äußere Klappe (316) mit der beweglichen Abdeckung (207) ausgerichtet ist und sich gegenüber einem hinteren Teil der durchbrochenen Zone des Rahmens (209) erstreckt, und einer angehobenen Position, in der jede äußere Klappe (316) so gekippt ist, dass ihre Vorderkante nach außen ragt und den hinteren Teil der durchbrochenen Zone des Rahmens (209) freigibt, bewegbar ist, und
dass die Gondel (102) ferner für jede äußere Klappe (316) einen Elektroantrieb (312) umfasst, der dazu vorgesehen ist, die äußere Klappe (316) von der abgesenkten Position in die angehobene Position und umgekehrt zu bewegen.

2. Zweistrom-Turbinenstrahltriebwerk (100) nach Anspruch 1, **dadurch gekennzeichnet, dass** es zumindest einen Deflektor (226) umfasst, der am Rahmen (209) befestigt und quer zur durchbrochenen Zone des Rahmens (209) angeordnet ist.

3. Luftfahrzeug (10), umfassend zumindest ein Zweistrom-Turbinenstrahltriebwerk (100) nach einem der vorangehenden Ansprüche.

## Claims

1. Two-flow turbine engine (100) comprising a motor and a nacelle (102) surrounding the motor and in which a secondary duct (202) for a secondary flow (208) is delimited between the nacelle (102) and the motor, said nacelle (102) comprising:
- a fan casing (301) comprising a front part (302) and a rear part (304),
- a fixed assembly (105) arranged at the front and comprising a fixed structure (206) and the front part (302) ,
- a movable assembly (106) arranged behind the fixed assembly (105) and comprising a frame (209) having open regions, a movable cowl (207) secured to the frame (209) and the rear part (304) mounted in front of the movable cowl (207), the movable assembly (106) being movable in translation on the fixed structure (206) in a direction of translation between an advanced position in which the movable assembly (106) is positioned such that the rear part (304) is moved close to and extends the front part (302), and a retracted position in which the movable assembly (106) is positioned such that the rear part (304) is moved rearwards away from the front part (302) so as to define, between them, an open window (210) between the secondary duct (202) and the exterior of the nacelle (102),
- a plurality of interior doors (104) mounted in articulated fashion, along a rear edge, on the frame (209), between a stowed position and a deployed position where, in the stowed position, each interior door (104) blocks an open region of the frame (209), and in the deployed position each interior door (104) extends across the secondary duct (202),
- a first actuator provided to make the frame (209) move in translation from the advanced position to the retracted position and vice versa, and
- a second actuator provided to make each interior door (104) move from the stowed position to the deployed position and vice versa,
**characterized in that** the rear part (304) is divided into multiple exterior flaps (316), each being mounted in articulated fashion, at its rear edge, to the frame (209) and being movable between a lowered position, in which each exterior flap (316) is aligned with the mobile cowl (207) and extends facing a rear part of the open region of the frame (209), and a raised position, in which each exterior flap (316) is tilted so as to point its front edge towards the outside and so as to free up the rear part of the open region of the frame (209), and
**in that** said nacelle (102) further comprises, for each exterior flap (316), an electric motor (312) that is provided for moving said exterior flap (316) from the lowered position to the raised position and vice versa.

2. Two-flow turbine engine (100) according to Claim 1, **characterized in that** it comprises at least one deflector (226) attached to the frame (209) and arranged across the open region of the frame (209).

3. Aircraft (10) comprising at least one two-flow turbine engine (100) according to either of the preceding claims.
